(19) Europäisches Patentamt
European Patent Office
Office européen des brevets

(11) **EP 2 527 800 B1**

(12) **EUROPÄISCHE PATENTSCHRIFT**

(45) Veröffentlichungstag und Bekanntmachung des Hinweises auf die Patenterteilung:
**01.02.2017 Patentblatt 2017/05**

(51) Int Cl.:
*G01F 23/22* (2006.01)      *G01F 23/02* (2006.01)
*G01F 23/24* (2006.01)      *G01F 23/292* (2006.01)
*G01F 23/296* (2006.01)

(21) Anmeldenummer: **12159135.8**

(22) Anmeldetag: **13.03.2012**

(54) **Verfahren und Vorrichtung zur Bestimmung der Pegelstandshöhe eines Mediums in metallurgischen Gefäßen**

Method and device for determining the level of a medium in metallurgical containers

Procédé et dispositif de détermination du niveau de seuil d'un milieu dans des récipients métallurgiques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2011 DE 102011076314**
**22.12.2011 DE 102011089524**

(43) Veröffentlichungstag der Anmeldung:
**28.11.2012 Patentblatt 2012/48**

(73) Patentinhaber: **SMS group GmbH**
**40237 Düsseldorf (DE)**

(72) Erfinder: **Reichel, Johann**
**40489 Düsseldorf (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
**EP-A1- 1 584 893        WO-A1-2008/031469**
**DE-A1- 1 958 224        DE-A1- 3 838 660**
**US-A1- 2003 174 325**

**Beschreibung**

Die Erfindung betrifft ein Verfahren und eine Vorrichtung zur Bestimmung der Pegelstandshöhe eines Mediums, zum Beispiel einer Flüssigschmelze, in einem kippbaren metallurgischen Gefäß, beispielsweise in einem Konverter, mit Hilfe eines optischen Messverfahrens.

Eine Verbesserung der Wirtschaftlichkeit einer metallurgischen Anlage und eines metallurgischen Verfahrens wird erzielt, wenn:

- die Anlage bestzeitlich und optimal genutzt wird. Dies spiegelt sich in kurzen Blaszeiten und sicherem Treffen der End-Sollwerte;
- der Prozess genau in Bezug auf die Sauerstoffzufuhr in die Schmelze geführt wird, d. h. ein optimaler Lanzenabstand von der Metalloberfläche gehalten wird,
- Spritzer und Auswürfe vermieden werden,
- der Feuerfestmaterialverbrauch der Anlage durch eine angepasste Chargiermenge des Flüssigmetalls minimiert wird,
- der Metallbadstand in Bezug auf die Entwicklung der dynamischen Kräfte während des Anlagebetriebs optimiert wird,
- eine zuverlässige Metall- und Schlackenprobe nach einer bestimmten Prozessablaufsperiode genommen und die Temperatur gemessen wird.

Damit kann der Prozesszustand, ausgedrückt durch die Metall-Schlackeanalyse und die Temperatur, aktualisiert werden.

Verfahrenstechnisch stützen sich diese Bedingungen auf eine zuverlässige Bestimmung des Metall- und Schlackespiegelniveaus, wofür verschiedene Methoden und Vorrichtungen bekannt sind.

Eine einfache Möglichkeit besteht darin, einen Holzstiel an der Blas- oder Sublanze zu befestigen und in das Stahlbad zu fahren. Nach einer kurzen Verweilzeit kann durch den Abbrand des Holzstiels die Höhe des Badspiegels mathematisch bestimmt werden. Die Methode ist sehr personen- und zeitintensiv und auch nicht sehr genau, da der Abbrand des Holzstiels durch die Schmelze und die Schlacke erfolgt.

Eine weitere Methode zur Bestimmung der Badspiegelhöhe ist eine Sublanzensonde, die den Temperaturunterschied zwischen dem Stahlbad und der Schlackenschicht registriert. Über den Fahrweg der Sublanzensonde wird dann die Höhe der Badoberfläche bestimmt. Diese Möglichkeit ist aber nur in Stahlwerken möglich, die mit einer Sublanze ausgestattet sind.

Weiterhin ist es bekannt, die Badspiegelhöhe eines Konverters über eine Radarmessung zu bestimmen. Hierbei werden über eine Öffnung im Abgassystem des Konverters Radarwellen auf die Badoberfläche gesendet. Über die Wellenlaufzeit kann dann die Höhe der Badoberfläche berechnet werden. Negativ bei diesem Verfahren ist, dass die Messergebnisse von der Schlackenschicht negativ beeinflusst werden, was zu Messungenauigkeiten führen kann. Darüber hinaus ist der Installationsaufwand hier sicher von Nachteil, da das Messsystem über den vorhandenen Lanzendom zur Messung geschwenkt werden muss. Regelmäßige Wartungsarbeiten führen zu zusätzlichen Kosten und Produktionsausfall.

Aus der DE 102 07 395 B4 ist ein Verfahren zum Bestimmen der momentanen Badspiegelhöhe in einem Elektrolichtbogenofen oder in einem Konverter für flüssigen Stahl bekannt, wobei eine Messsonde, die mit dem metallischen Gefäßmantel einen elektrischen Messkreis ausbildet, bis auf den Badspiegel abgesenkt wird. Der elektrische Messkreis ist auf Leitfähigkeitswerte der Schlackenschicht, des Flüssigmetalls und des Feuerfestmaterials abgestimmt. Abhängig von dem pro Zeiteinheit zurückgelegten Absenkweg der Messsonde und einer bei Berührung der Schlackenschicht und/oder des Flüssigmetalls eintretenden Änderung der elektrischen Leitfähigkeit von Schlacke und/oder Flüssigmetall erzeugt die Messsonde ein Messsignal, wodurch die Badspiegelhöhe angezeigt wird.

In der DE 38 22 705 C2 wird ein Verfahren zur Messung der Höhe des Badspiegels, des Sauerstoffpartialdrucks und der Temperatur eines unter einer Schlackenschicht befindlichen Metallbades in einem Behälter, insbesondere in einem Konverter beschrieben, wobei eine aus einer EMK-Zelle zur Messung des Sauerstoffpartialdruckes und aus einem Thermoelement bestehenden, durch eine Schutzkappe geschützten Messsonde von einer außerhalb des Behälters gelegene Ausgangsstellung bis zu einer als Fixpunkt vorbestimmten Tiefe in das Metallbad eingetaucht wird und nach dem Aufschmelzen der Schutzkappe der Sauerstoffpartialdruck und die Temperatur des Metallbades gemessen werden. Während der mit einer langsameren Geschwindigkeit erfolgenden Aufwärtsbewegung der Messsonde werden der Sauerstoffpartialdruck und die Temperatur als Funktion der von der Messsonde in dem Metallbad von dem gewählten Fixpunkt aus zurückgelegten Wegstrecke gemessen und die bis zum Eintreten einer Änderung des gemessenen Sauerstoffpartialdruckes und der Temperatur von dem Fixpunkt aus zurückgelegte Wegstrecke wird als Maß für die Badstandhöhe erfasst.

In der DE 103 52 628 A1 wird ein Verfahren und eine Einrichtung zum Bestimmen der Schmelzbadhöhe von aufeinanderfolgenden Roheisen-Chargen in einem Elektrolichtbogen-Ofen beim Herstellen von Stahl aus Roheisen beschrieben, wobei zur Einstellung des Abstandes der Sauerstoff-Aufblaslanze zum Schmelzbadspiegel der prozessbedingte Abstand zwischen dem Lanzenkopf und der Schmelzbadhöhe dadurch ermittelt wird, dass der Schmelzbadspiegel der jeweiligen Charge durch Kippen des Elektrolichtbogen-Ofens und nach Rückkippen in die Betriebslage durch optisches Messen oder zumindest durch Schätzen des Kippwinkels, beispielsweise bei geöffneter Schlackentür, festgestellt und daraus die Schmelzbadhöhe bestimmt und danach der Abstand eingestellt wird.

Aus der DE 696 05 665 T2 ist ein Verfahren zur Messung der in einem kippbaren Gießofen enthaltenden Menge an flüssigem Metall bekannt, wobei eine Referenzkurve für die Metallmenge im Ofen als Funktion des Kippwinkels, bei dem das Metallniveau an der Ofenauslassöffnung steht, erstellt und während des Gießvorgangs die zu jedem Kippwinkel verbleibende Metallmenge im Ofen der Referenzkurve entnommen wird.

Aus der internationalen Patentanmeldung WO 2008/031469 A1 ist ein Verfahren zum Abgießen von Schmelze aus einem kippbaren metallurgischen Gefäß sowie eine Anlage zur Durchführung des Verfahrens bekannt. Konkret offenbart diese Patentanmeldung auch ein Verfahren und eine Vorrichtung zur Bestimmung der Pegelstandshöhe eines ersten Mediums in dem metallurgischen Gefäß, wobei das erste Medium in dem Gefäß von einem zweiten Medium bedeckt ist. Konkret weist die Vorrichtung eine Auswerteeinheit auf zum Erfassen einer ersten Kippposition des Gefäßes, eine Winkelmesseinrichtung zum Ermitteln des ersten Kippwinkels in der ersten Kippposition und eine Berechnungseinheit zum Berechnen der Pegelstandshöhe, insbesondere des zweiten Mediums.

Ausgehend von diesem geschilderten Stand der Technik ist es Aufgabe der Erfindung, ein Verfahren und eine Vorrichtung zur Ermittlung der Höhe des Pegelstandes bzw. des Badspiegels in metallurgischen Gefäßen anzugeben, mit denen bei verbesserter Genauigkeit Produktionsausfallzeiten, wie sie bei bekannten Verfahren und Vorrichtungen durch den Mess- und Wartungsaufwand angefallen waren, reduziert werden und die bei allen bekannten kippbaren metallurgischen Gefäßen einsetzbar sind.

Diese gestellte Aufgabe wird durch das im Anspruch 1 beschriebene Verfahren gelöst.

In einer ersten Ausgestaltung beschreibt das Verfahren, dass zur Berechnung der Pegelstandshöhe $p_1$ des ersten Mediums zunächst eine Höhendifferenz $h_{differenz}$ an der Wandung des Gefäßes aus dem vorgegebenen halben Durchmesser D des Gefäßes und dem ermittelten ersten Kippwinkel $\alpha_1$ errechnet wird zu:

$$h_{differenz} \qquad = \qquad D/2 \tan \alpha_1$$

und daraus dann die Pegelstandshöhe $p_1$ des ersten Mediums als Differenz aus der Höhe der Messstelle $h_{Messstelle}$ und der Höhendifferenz $h_{differenz}$ berechnet wird zu

$$p_1 = \qquad h_{Messstelle} - h_{differenz}$$

Die Größe $h_{differenz}$ repräsentiert die Differenz zwischen der Höhe der Messstelle $h_{Messstelle}$ und der Pegelstandshöhe $p_1$ des ersten Mediums in der vertikalen Position des Gefäßes, beide bezogen auf den Boden des Gefäßes, und bildet mit dem Badspielgel in der Kippposition des Gefäßes bezogen auf den Kippwinkel $\alpha$ ein rechtwinkliges Dreieck aus mit den Seiten

| | |
|---|---|
| Gegenkathete | = Höhendifferenz $h_{differenz}$ |
| Ankathete | = Durchmessers D/2 |
| Hypotenuse | = Pegelstand $p_1$ des ersten Mediums |

Weiterhin sieht das Verfahren beispielhaft vor, dass die Messstelle ein optisches Lasersystem zum Erzeugen eines Laser-Messstrahls und eine Auswerteeinheit zum Auswerten von Lichtspektren aufweist, und dass die Erfassung des Kippwinkels gemäß Schritt c. folgende Teilschritte aufweist:

c1. Einleiten des Laser-Messstrahls durch die Messstelle in Form einer Öffnung in der Gefäßwandung in das Gefäßinnere,

c2. Bestrahlen des zweiten Mediums mit dem Laser-Messstrahl zum Erzeugen eines zweiten Plasmas aus dem zweiten Medium,

c3. Identifizieren des zweiten Mediums durch Erfassung und Auswerten des Lichtspektrums des zweiten Plasmas durch die Auswerteeinheit,

c4. Kippen des Gefäßes solange, bis das erste Medium den Laser-Messstrahl erreicht;

c5. Erzeugen eines ersten Plasmas durch den Laser-Messstrahl aus dem ersten Medium ;

c6. Erkennen des ersten Mediums durch Auswerten des ersten Plasmas oder zumindest Erkennen eines anderen Mediums als das zuerst erkannte zweite Medium; und

c7. Definieren der Kippstellung in welcher das dritte Medium die Messstelle erreicht und/oder erkannt wird als erste Kippposition.

Das erfindungsgemäße Verfahren sieht weiterhin beispielhaft vor, dass in dem metallurgischen Gefäß ein weiteres drittes Medium als heterogene Zwischenschicht zwischen dem ersten und dem zweiten Medium vorhanden ist, wobei das dritte Medium eine erste Grenzschicht mit dem ersten Medium und eine zweite Grenzschicht mit dem zweiten Medium bildet, und wobei die Messstelle bei vertikaler Ausrichtung des metallurgischen Gefäßes oberhalb der zweiten Grenzschicht angeordnet ist; und zur Bestimmung der Gesamt- Pegelstandshöhe $p_{3+1}$ des dritten Mediums mit dem unterlagerten ersten Medium, bezogen auf die vertikale Ausrichtung des Gefäßes, wie folgt verfahren wird:

Wiederholen der Schritte c.), d.) und e.) gemäß Anspruch 1 oder 2 in Bezug auf das dritte Medium, wobei in Schritt c.) das Gefäß in eine zweite Kippposition gekippt wird, bis das dritte Medium bzw. die zweite Grenzschicht die Messstelle erreicht, wobei in Schritt d.) ein zweiter Kippwinkel $\alpha_{3+1}$ für die zweite Kippposition ermittelt wird; und wobei gemäß Schritt e.) die Gesamtregelstandshöhe $p_{3+1}$ des dritten Mediums mit dem unterlegten ersten Medium unter Berücksichtigung des zweiten Kippwinkels berechnet wird.

Diese Bestimmung wird für das dritte Medium und für das erste Medium nacheinander durchgeführt und mit den ermittelten Kippwinkeln $\alpha_1$ bzw. $\alpha_{3+1}$ dann die jeweilige Höhendifferenz und die jeweilige Pegelstandshöhe berechnet, wobei entsprechend gilt:

$$h_{differenz}(\text{Boden/drittes Medium}) = D/2 \cdot \tan \alpha_{3+1} \qquad (1)$$

$$h_{differenz}(\text{Boden/erstes Medium}) = D/2 \cdot \tan \alpha_1 \qquad (2)$$

und

$$p_{3+1} \ (\text{Boden/drittes + erstes Medium}) = h_{Messstelle} - h_{differenz}$$
$$(\text{Boden/drittes + erstes Medium})$$

$$p_1 \ (\text{Boden/Metall}) = h_{Messstelle} - h_{Badspiegeldifferenz}$$
$$(\text{Boden/erstes Medium})$$

Die Höhe der Schlackenschicht berechnet sich dann zu:

$$h_{Schlacke} = p_{3+1} - p_1 \qquad (3)$$

Ein durchgeführtes Rechenbeispiel für einen 380 t Basic Oxygen Furnace BOF-Konverter mit den Daten

| | |
|---|---|
| Durchmesser D | = 4500 mm |
| Höhe der Messstelle $h_{Messstelle}$ | = 3185 mm |
| Kippwinkel Schlackenniveau $\alpha_{3+1}$ | = 35° |
| Kippwinke Metallbadniveau $\alpha_1$ | = 40° |

ergab folgendes Ergebnis:

| | | |
|---|---|---|
| (1) | $p_{1+3}$ | = 1609 mm |
| (2) | $p_1$ | = 1297 mm |

(fortgesetzt)

(3)   $^h$Schlacke    = 312 mm

Das Verfahren sieht demnach vor, dass die Schichtdicke des dritten Mediums durch Subtraktion der Pegelstandhöhe $p_1$ des ersten Mediums von der Gesamt-Pegelstandshöhe $p_{3+1}$ errechnet wird.

Im Übrigen ist beispielhaft vorgesehen, dass die Messstelle (30) ein optisches Lasersystem zum Erzeugen eines Laser-Messstrahls und eine Auswerteeinheit (40) zum Auswerten von Lichtspektren aufweist und dass die Erfassung des Kippwinkels gemäß Schritt c. folgende Teilschritte aufweist:

c1'. Einleiten des Laser-Messstrahls durch eine Öffnung in der Gefäßwandung in das Gefäßinnere,

c2'. Bestrahlen des zweiten Mediums mit dem Laser-Messstrahl zum Erzeugen eines zweiten Plasmas in dem zweiten Medium,

c3'. Identifizieren des zweiten Mediums durch Erfassung und Auswerten des Lichtspektrums des zweiten Plasmas durch die Auswerteeinheit,

c4'. Kippen des Gefäßes in eine Kippstellung, solange, bis das dritte Medium den Laser-Messstrahl erreicht und durch den Laser-Messstrahl aus dem dritten Medium (20) ein drittes Plasma erzeugt wird,

c5'. wobei durch die Auswerteeinheit das dritte Medium erkannt wird, und

c6'. Definieren der Kippstellung in welcher das dritte Medium die Messstelle erreicht und/oder erkannt wird als zweite Kippposition.

Das erfindungsgemäße Verfahren sieht weiterhin beispielhaft vor, dass bei der im n-sec. bis μ-sec.-Bereich erfolgenden Laserstrahlmessung die gesamte Messzeit einschließlich der erforderlichen Kippbewegung des metallurgischen Gefäßes in einer Zeitspanne von ca. 30 - 50 sec. durchgeführt wird.

Nur während des kurzen Messzeitraums, während dem das dritte Medium und/oder das erste Medium beim Kippen des Gefäßes die Laser-Messdüse passieren, gelangt die Laser-Messdüse unter die jeweiligen Niveaus des ersten und/oder des zweiten Mediums und kommt mit diesen in Kontakt, weshalb in dieser kritischen Zeitspanne die Laser-Messdüse vorzugsweise durch Einblasen eines neutralen Gases, wie beispielsweise Argon, mit Überdruck freigehalten werden muss.

Das Verfahren sieht weiterhin vor, dass das erste Medium als eine Metallschmelze ausgebildet ist.

Gemäß einem weiteren Ausführungsbeispiel beschreibt das Verfahren, dass das zweite Medium als gasförmiges Medium ausgebildet ist.

Das Verfahren sieht weiterhin vor, dass das dritte Medium als Schlacke ausgebildet ist.

Im Übrigen ist beispielhaft vorgesehen, dass für die Bestimmung der Pegelstandshöhe $p_1$ des ersten Mediums der maximale Kippwinkel bezogen auf die vertikale Position des Gefäßes, bei 35° - 45° liegt und der Kippwinkel für die Bestimmung der Schichtdicke des dritten Mediums um ca. 5 bis 10° gegenüber dem maximalen Kippwinkel verkleinert ist.

Die oben genannte Aufgabe wird weiterhin gelöst durch eine Vorrichtung zur Bestimmung der Pegelstandshöhe eines ersten Mediums in einem kippbaren metallurgischen Gefäß gemäß Anspruch 12.

Ein erstes Ausführungsbeispiel der Vorrichtung sieht vor, dass innerhalb der Messstelle ein Sensor in Form eines optischen Lasersystems angeordnet ist zur Erzeugung eines Laser-Messstrahls, der bei Bestrahlung der Medien durch eine Öffnung in der Gefäßwandung ein Plasma erzeugt, und dass das Auswertesystem ausgebildet ist, zum Auswerten der veränderten Lichtspektren der Plasmen von zwei benachbarten unterschiedlichen Medien und zum Erkennen des Übergangs von einem Medium zu einem anderen während des Kippens des Gefäßes in einer Kippposition, wobei die Winkelmesseinrichtung den Kippwinkel des Gefäßes in der Kippposition erfasst, in welcher die Auswerteeinheit das veränderte Lichtspektrum beim Übergang an der Grenzschicht erkennt.

Die Laser-Messdüse ist in der Messstelle, dass heißt in einem Bereich eines minimalen Verschleißes, im zylindrischen Teil des Gefäßes in dessen Gefäßwandung so angeordnet, dass sie sich in der vertikalen Position des metallurgischen Gefäßes während des Blas- bzw. Schmelzbetriebs in einem Stand-by-Betrieb oberhalb des Schlacken- und Metallniveaus befindet. Eine bevorzugte Position zur Anordnung der Laser-Messdüse stellt bei Konvertern der Bereich des Tragrings dar.

Im Übrigen ist vorgesehen, dass eine Überdruckeinrichtung vorgesehen ist zum Einbringen eines neutralen Gasgemisches, wie beispielsweise $0_2$/$N_2$ oder $0_2$/Ar Schutzgas mit Überdruck durch einen Anschluss in die Messstelle, um während des Blas- bzw. Schmelzbetriebs bei vertikaler Position des metallurgischen Gefäßes oder bei einem Kippvorgang des Gefäßes ein Austreten der in dem Gefäß befindlichen Medien aus dem Gefäß in die Messstelle zu verhindern, das heißt, um die Messstelle von den Medien freizuhalten.

Weitere vorteilhafte Ausgestaltungen des Verfahrens und der Vorrichtung sind Gegenstand der abhängigen Ansprüche.

Einzelheiten und Vorteile der Erfindung werden nachfolgend an in schematischen Zeichnungsfiguren dargestellten Ausführungsbeispielen näher erläutert.

Es zeigen:

Figur 1     einen Konverter in der vertikalen Position,

Figur 2     ein mit einer Flüssigkeit gefülltes Trinkglas zur Erläuterung der erfindungsgemäßen Berechnung; und

Figur 3     den Konverter der Fig. 1 in der gekippten Stellung.

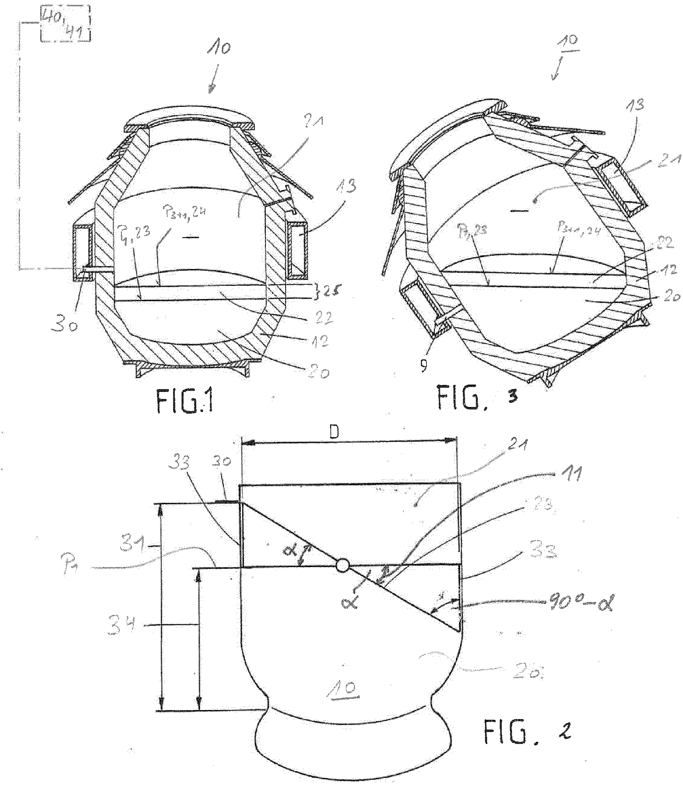

Die Figur 1 zeigt ein metallurgisches Gefäß 10 in Form eines Konverters in der vertikalen Blasposition (die Blaslanze ist nicht dargestellt), gefüllt mit einem ersten Medium 20, nachfolgend auch als Metallbad 20 bezeichnet, und darüber geschichtet ein drittes Medium 22, nachfolgend auch als Schlacke 22 bezeichnet, die eine Schichtdicke 25 aufweist. Oberhalb der Schlacke befindet sich ein zweites Medium 21, das beispielsweise gasförmig ausgebildet ist. Die Schlacke 22 bildet mit dem ersten Medium 20 eine erste Grenzschicht 23 und mit dem zweiten Medium 21 eine zweite Grenzschicht 24. Möglich ist aber auch, dass in dem metallurgischen Gefäß 10 lediglich nur zwei unterschiedliche Medien mit nur einer Grenzschicht 23 angeordnet sind, so wie in der Figur 3 beschrieben.

Im Bereich eines Tragrings 13, der an der äußeren Mantelfläche des Gefäßes 10 angeordnet ist, ist seitlich in der Gefäßwandung 12 - bei senkrechter/aufrechter Position des Gefäß - mit Abstand oberhalb des Schlacken- bzw. Metallpegelstandes $p_{3+1}$, $p_1$ eine Messstelle 30 mit beispielsweise einem LaserSystem angeordnet. Die einfachste Form einer Messstelle kann aber auch eine Öffnung darstellen. Selbstverständlich können an dieser Messstelle auch alternative, temperaturbeständige Sensoren, Ultraschall- Messeinrichtungen, Wärmebild- Sensoren oder einfach nur ein temperaturbeständiges Schauglas angeordnet sein. Die Sensoren müssen nur geeignet sein, beim Kippen des Gefäßes das Erreichen der Messstelle durch die Medien zu erkennen, weil dies für die Durchführung des erfindungsgemäßen Verfahrens wesentlich ist, wie weiter unten beschrieben wird.

Das erfindungsgemäße Verfahren zur Bestimmung der Pegelstandshöhe eines ersten Mediums, welches von einem zweiten Medium bedeckt ist, in einem kippbaren metallurgischen Gefäß (10), wird nachfolgend unter Bezugnahme auf die Figuren 2 und 3 näher beschrieben. Das Verfahren umfasst die folgenden Schritte:

a. Anordnen einer Messstelle (30) in der Gefäßwandung (12) oberhalb des Pegelstandes $p_1$ des ersten Mediums (20) bei vertikaler Ausrichtung des metallurgischen Gefäßes (10),
b. Kippen des Gefäßes (10) in eine erste Kippposition, bis das erste Medium (20) die Messstelle (30) erreicht,
c. während des Kippens des Gefäßes: Erkennen einer ersten Kippposition, bei welcher das erste Medium (20) die Messstelle (30) erreicht, mit Hilfe eines Sensors und einer Auswerteeinheit (40);
d. Ermitteln eines ersten Kippwinkels $\alpha_1$ in dieser ersten Kippposition,
e. Berechnen der Pegelstandshöhe $p_1$ des ersten Mediums (20) bei vertikaler Position des Gefäßes (10) auf Basis trigonometrischer Funktionen aus dem ermittelten ersten Kippwinkel $\alpha_1$.

Zur Berechnung der Pegelstandshöhe $p_1$ des ersten Mediums (20) wird zunächst eine Höhendifferenz (33) $h_{differenz}$ an der Wandung (12) des Gefäßes (10) aus dem vorgegebenen halben Durchmesser D (14) des Gefäßes (10) und dem ermittelten ersten Kippwinkel $\alpha_1$ errechnet zu:

$$h_{differenz} \quad = \quad D/2 \tan \alpha_1$$

Daraus wird die Pegelstandshöhe $p_1$ des ersten Mediums (20) als Differenz aus der Höhe der Messstelle (31) $h_{Messstelle}$ und der Höhendifferenz (33) $h_{differenz}$ berechnet wird zu

$$p_1 \quad = \quad h_{Messstelle} - h_{Differenz}$$

Wenn die Messstelle (30) ein optisches Lasersystem zum Erzeugen eines Laser-Messstrahls und eine Auswerteeinheit (40) zum Auswerten von Lichtspektren aufweist, umfasst die Erfassung des Kippwinkels gemäß Schritt c. folgende Teilschritte:

c1. Einleiten des Laser-Messstrahls durch eine Öffnung in der Gefäßwandung in das Gefäßinnere,
c2. Bestrahlen des zweiten Mediums (21) mit dem Laser-Messstrahl zum Erzeugen eines zweiten Plasmas aus dem zweiten Medium (21),

c3. Identifizieren des zweiten Mediums (21) durch Erfassung und Auswerten des Lichtspektrums des zweiten Plasmas durch die Auswerteeinheit (40),

c4. Kippen des Gefäßes (10) solange, bis das erste Medium (20) den Laser-Messstrahl erreicht;

c5. Erzeugen eines ersten Plasmas durch den Laser-Messstrahl aus dem ersten Medium (20);

c6. Erkennen des ersten Mediums (20) durch Auswerten des ersten Plasmas oder zumindest Erkennen eines anderen dritten Mediums (22) als das zuerst erkannte zweite Medium (21); und

c7. Definieren der Kippstellung in welcher das dritte Medium (22) die Messstelle (30) erreicht und/oder erkannt wird als erste Kippposition.

Gemäß den Figuren 3 und 1 kann in dem metallurgischen Gefäß (10) ein weiteres drittes Medium (22) als heterogene Zwischenschicht zwischen dem ersten und dem zweiten Medium (20, 21) vorhanden sein, wobei das dritte Medium (22) eine erste Grenzschicht (23) mit dem ersten Medium (20) und eine zweite Grenzschicht (24) mit dem zweiten Medium (21) bildet. Bei vertikaler Ausrichtung des metallurgischen Gefäßes (10) muss dann die Messstelle (30) zur Durchführung des erfindungsgemäßen Verfahrens oberhalb der zweiten Grenzschicht (24) angeordnet sein.

Zur Bestimmung der Gesamt- Pegelstandshöhe $p_{3+1}$ des dritten Mediums (22) mit dem unterlagerten ersten Medium (20), bezogen auf die vertikale Ausrichtung des Gefäßes (10), wird erfindungsgemäß wie folgt verfahren:

Wiederholen der oben aufgezeigten Schritte c., d. und e. in Bezug auf das dritte Medium, wobei in Schritt c.) das Gefäß in eine zweite Kippposition gekippt wird, bis das dritte Medium (22) bzw. die zweite Grenzschicht (24) die Messstelle (30) erreicht, wobei in Schritt d.) ein zweiter Kippwinkel $\alpha_{3+1}$ für die zweite Kippposition ermittelt wird; und wobei gemäß Schritt e.) die Gesamtregelstandshöhe $p_{3+1}$ des dritten Mediums (22) mit dem unterlegten ersten Medium unter Berücksichtigung des zweiten Kippwinkels $\alpha_{3+1}$ berechnet wird.

Wenn die Messstelle (30) ein optisches Lasersystem zum Erzeugen eines Laser-Messstrahls und eine Auswerteeinheit (40) zum Auswerten von Lichtspektren aufweist, erfolgt die Erfassung der Kippwinkel $\alpha_1$, $\alpha_{3+1}$ gemäß Schritt c. mit folgenden Teilschritten:

c1'. Einleiten des Laser-Messstrahls durch eine Öffnung in der Gefäßwandung (12) in das Gefäßinnere,

c2'. Bestrahlen des zweiten Mediums (21) mit dem Laser-Messstrahl zum Erzeugen eines zweiten Plasmas in dem zweiten Medium (21),

c3'. Identifizieren des zweiten Mediums (21) durch Erfassung und Auswerten des Lichtspektrums des zweiten Plasmas durch die Auswerteeinheit (40),

c4'. Kippen des Gefäßes (10) in eine Kippstellung, solange, bis das dritte Medium (22) den Laser-Messstrahl erreicht und durch den Laser-Messstrahl aus dem dritten Medium (22) ein drittes Plasma erzeugt wird,

c5'. wobei durch die Auswerteeinheit (40) das dritte Medium (22) erkannt wird, und

c6'. Definieren der Kippstellung in welcher das dritte Medium (22) die Messstelle erreicht und/oder erkannt wird als zweite Kippposition.

Die Berechnung der Schichtdicke (25) des dritten Mediums (22) erfolgt durch Subtraktion der Pegelstandhöhe $p_1$ des ersten Mediums (20) von der Gesamt-Pegelstandshöhe $p_{3+1}$.

Bei der im n-sec. bis $\mu$-sec.-Bereich erfolgenden Laserstrahlmessung wird die gesamte Messung, einschließlich der erforderlichen Kippbewegung des metallurgischen Gefäßes (10), in einer Zeitspanne von ca. 30 - 50 sec. durchgeführt.

Bei dem ersten Medium (20) handelt es sich typischerweise um eine Metallschmelze, bei dem zweiten Medium (21) um ein gasförmiges Medium und bei dem dritten Medium (22) z.B. um Schlacke.

Für die Bestimmung der Pegelstandshöhe $p_1$ des ersten Mediums (20) liegt der maximale Kippwinkel ($\alpha_1$) beispielsweise bei 35° - 45° und ist der zweite Kippwinkel ($\alpha_{3+1}$) für die Bestimmung der Schichtdicke des dritten Mediums (22) um ca. 5 bis 10° verkleinert.

Bezugszeichenliste

10 metallurgisches Gefäß
12 Gefäßwandung
13 Tragring
14 Durchmesser "D" des Gefäßes im zylindrischen Teil
20 erstes Medium

21  zweites Medium
22  drittes Medium
23  erste Grenzschicht
24  zweite Grenzschicht
25  Schichtdicke "S"
30  Messstelle
31  Höhe der Messstelle $h_{Messstelle}$
33  Höhendifferenz $h_{differenz}$
34  Höhe des Pegelstandes "$p_1$"
40  Berechnungseinheit
41  Winkelmesseinrichtung

$p_1$    Pegelstand des ersten Mediums
$p_{3+1}$  Pegelstandshöhe erstes Medium + drittes Medium
$\alpha_1$    erster Kippwinkel
$\alpha_{3+1}$  zweiter Kippwinkel

**Patentansprüche**

1.  Verfahren zur Bestimmung der Pegelstandshöhe $p_1$ eines ersten Mediums (20) in einem kippbaren metallurgischen Gefäß (10), beispielsweise in einem Konverter, wobei das erste Medium (20) mit einem zweiten Medium (21) bedeckt ist, aufweisend die folgenden Schritte:

    a. Anordnen einer Messstelle (30) in der Gefäßwandung (12) oberhalb des Pegelstandes $p_1$ des ersten Mediums (20) bei vertikaler Ausrichtung des metallurgischen Gefäßes (10),
    b. Kippen des Gefäßes (10)
    c. während des Kippens des Gefäßes: Erkennen einer ersten Kippposition, bei welcher das erste Medium (20) die Messstelle (30) erreicht, mit Hilfe eines Sensors und einer Auswerteeinheit (40);
    d. Ermitteln eines ersten Kippwinkels $\alpha_1$ in dieser ersten Kippposition,
    e. Berechnen der Pegelstandshöhe $p_1$ des ersten Mediums (20) bei vertikaler Position des Gefäßes (10) auf Basis trigonometrischer Funktionen aus dem ermittelten ersten Kippwinkel $\alpha_1$.

2.  Verfahren nach Anspruch 1,
    **dadurch gekennzeichnet,**
    **dass** zur Berechnung der Pegelstandshöhe $p_1$ des ersten Mediums (20) zunächst eine Höhendifferenz (33) $h_{differenz}$ an der Wandung (12) des Gefäßes (10) aus dem vorgegebenen halben Durchmesser D (14) des Gefäßes (10) und dem ermittelten ersten Kippwinkel $\alpha_1$ errechnet wird zu:

$$h_{differenz} = D/2 \tan \alpha_1$$

und daraus dann die Pegelstandshöhe $p_1$ des ersten Mediums (20) als Differenz aus der Höhe der Messstelle (31) $h_{Messstelle}$ und der Höhendifferenz (33) $h_{differenz}$ berechnet wird zu

$$p_1 = h_{Messstelle} - h_{Differenz}$$

3.  Verfahren nach einem der Ansprüche 1 bis 2,
    **dadurch gekennzeichnet,**
    **dass** der Sensor ausgebildet ist in Form eines optischen Lasersystem zum Erzeugen eines Laser-Messstrahls und die Auswerteeinheit (40) ausgebildet ist zum Auswerten von Lichtspektren; und
    **dass** die Erkennung der ersten Kippposition gemäß Schritt c. folgende Teilschritte aufweist:

    c1. Einleiten des Laser-Messstrahls durch die Messstelle in Form einer Öffnung in der Gefäßwandung in das Gefäßinnere,

c2. Bestrahlen des zweiten Mediums (21) mit dem Laser-Messstrahl zum Erzeugen eines zweiten Plasmas aus dem zweiten Medium (21),

c3. Identifizieren des zweiten Mediums (21) durch Erfassung und Auswerten des Lichtspektrums des zweiten Plasmas durch die Auswerteeinheit (40),

c4. Kippen des Gefäßes (10) solange, bis das erste Medium (20) den Laser-Messstrahl erreicht;

c5. Erzeugen eines ersten Plasmas durch den Laser-Messstrahl aus dem ersten Medium (20);

c6. Erkennen des ersten Mediums (20) durch Auswerten des ersten Plasmas oder zumindest Erkennen eines anderen dritten Mediums (22) als das zuerst erkannte zweite Medium (21); und

c7. Definieren der Kippstellung in welcher das dritte Medium (22) die Messstelle (30) erreicht und/oder erkannt wird als erste Kippposition.

4. Verfahren nach Anspruch 3,
**dadurch gekennzeichnet, dass**
in dem metallurgischen Gefäß (10) das weitere dritte Medium (22) als heterogene Zwischenschicht zwischen dem ersten und dem zweiten Medium (20, 21) vorhanden ist, wobei das dritte Medium (22) eine erste Grenzschicht (23) mit dem ersten Medium (20) und eine zweite Grenzschicht (24) mit dem zweiten Medium (21) bildet, und wobei die Messstelle (30) bei vertikaler Ausrichtung des metallurgischen Gefäßes (10) oberhalb der zweiten Grenzschicht (24) angeordnet ist; und
zur Bestimmung der Gesamt- Pegelstandshöhe $p_{3+1}$ des dritten Mediums (22) mit dem unterlagerten ersten Medium (20), bezogen auf die vertikale Ausrichtung des Gefäßes (10), wie folgt verfahren wird:

Wiederholen der Schritte c.), d.) und e.) gemäß Anspruch 1 oder 2 in Bezug auf das dritte Medium, wobei in Schritt c.) das Gefäß in eine zweite Kippposition gekippt wird, bis das dritte Medium (22) bzw. die zweite Grenzschicht (24) die Messstelle (30) erreicht, wobei in Schritt d.) ein zweiter Kippwinkel $\alpha_{3+1}$ für die zweite Kippposition ermittelt wird; und wobei gemäß Schritt e.) die Gesamtregelstandshöhe $p_{3+1}$ des dritten Mediums (22) mit dem unterlegten ersten Medium unter Berücksichtigung des zweiten Kippwinkels $\alpha_{3+1}$ berechnet wird.

5. Verfahren nach Anspruch 4,
**dadurch gekennzeichnet, dass**
der Sensor in Form eines optischen Lasersystems zum Erzeugen eines Laser-Messstrahls ausgebildet ist und die Auswerteeinheit (40) ausgebildet ist zum Auswerten von Lichtspektren; und
dass die Erfassung des Kippwinkels ($\alpha_1$, $\alpha_{3+1}$) gemäß Schritt c. folgende Teilschritte aufweist:

c1'. Einleiten des Laser-Messstrahls durch die Meßstelle in Form einer Öffnung in der Gefäßwandung (12) in das Gefäßinnere,

c2'. Bestrahlen des zweiten Mediums (21) mit dem Laser-Messstrahl zum Erzeugen eines zweiten Plasmas in dem zweiten Medium (21),

c3'. Identifizieren des zweiten Mediums (21) durch Erfassung und Auswerten des Lichtspektrums des zweiten Plasmas durch die Auswerteeinheit (40),

c4'. Kippen des Gefäßes (10) in eine Kippstellung, solange, bis das dritte Medium (22) den Laser-Messstrahl erreicht und durch den Laser-Messstrahl aus dem dritten Medium (22) ein drittes Plasma erzeugt wird,

c5'. wobei durch die Auswerteeinheit (40) das dritte Medium (22) erkannt wird, und

c6'. Definieren der Kippstellung in welcher das dritte Medium (22) die Messstelle erreicht und/oder erkannt wird als zweite Kippposition.

6. Verfahren nach Anspruch 4 oder 5,
**dadurch gekennzeichnet, dass**
die Schichtdicke (25) des dritten Mediums (22) durch Subtraktion der Pegelstandhöhe $p_1$ des ersten Mediums (20) von der Gesamt-Pegelstandshöhe $p_{3+1}$ errechnet wird.

7. Verfahren nach Anspruch 5 oder 6,
**dadurch gekennzeichnet, dass**
bei der im n-sec. bis $\mu$-sec.-Bereich erfolgenden Laserstrahlmessung die gesamte Messung, einschließlich der erforderlichen Kippbewegung des metallurgischen Gefäßes (10), in einer Zeitspanne von ca. 30 - 50 sec. durchgeführt wird.

8. Verfahren nach einem der vorangegangenen Ansprüche,
**dadurch gekennzeichnet, dass**

das erste Medium (20) als eine Metallschmelze ausgebildet ist.

9. Verfahren nach einem der vorangegangenen Ansprüche,
**dadurch gekennzeichnet, dass**
das zweite Medium (21) als gasförmiges Medium ausgebildet ist.

10. Verfahren nach einem der vorangegangenen Ansprüche,
**dadurch gekennzeichnet, dass**
das dritte Medium (22) als Schlacke ausgebildet ist.

11. Verfahren nach einem der vorangegangenen Ansprüche,
**dadurch gekennzeichnet, dass**
für die Bestimmung der Pegelstandshöhe $p_1$ des ersten Mediums (20) der maximale Kippwinkel ($\alpha_1$) bezogen auf die vertikale Position des Gefäßes (10), bei 35° - 45° liegt und der zweite Kippwinkel ($\alpha_{3+1}$) für die Bestimmung der Schichtdicke des dritten Mediums (22) um ca. 5 bis 10° verkleinert ist.

12. Vorrichtung zum Durchführen eines Verfahrens zur Bestimmung der Pegelstandshöhe eines ersten Mediums (20) in einem kippbaren metallurgischen Gefäß (10), beispielsweise in einem Konverter, wobei das erste Medium (20) in dem Gefäß (10) von einem zweiten Medium (21) bedeckt ist; und
wobei die Vorrichtung aufweist:

   eine Auswerteeinheit (40) zum Erfassen einer ersten Kippposition des Gefäßes;
   eine Winkelmesseinrichtung (41) zum Ermitteln des ersten Kippwinkels ($\alpha_1$) in der ersten Kippposition; und
   eine Berechnungseinheit (40) zum Berechnen der Pegelstandshöhe;
   **dadurch gekennzeichnet,**
   **dass** eine Messstelle (30) in der Gefässwandung (12) vorgesehen ist, welche bei vertikal ausgerichtetem Gefäß (10) oberhalb des Pegelstandes des ersten Mediums (20) angeordnet ist,
   **dass** der Messstelle (30) ein Sensor zugeordnet ist und dass der Sensor und
   die Auswerteeinheit (40) ausgebildet sind zum Erfassen der ersten Kippposition, in welcher das erste Medium (20) während des Kippens des Gefäßes (10) die Messstelle (30) erreicht, und
   **dass** die Berechnungseinheit (40) ausgebildet ist zum Berechnen der Pegelstandshöhe $p_1$ des ersten Mediums (20) bei vertikaler Position des Gefäßes (10) auf Basis trigonometrischer Funktionen aus dem ermittelten ersten Kippwinkel ($\alpha_1$).

13. Vorrichtung nach Anspruch 12,
**dadurch gekennzeichnet,**
**dass** der Sensor innerhalb der Messstelle (30) in Form eines optischen Lasersystems ausgebildet und angeordnet ist, zur Erzeugung eines Laser-Messstrahls, der bei Bestrahlung der Medien (20,21,22) durch eine Öffnung in der Gefäßwandung (12) ein Plasma erzeugt, und
**dass** die Auswerteeinheit (40) ausgebildet ist, zum Auswerten der veränderten Lichtspektren der Plasmen von zwei benachbarten unterschiedlichen Medien und zum Erkennen des Übergangs von einem Medium (20, 21, 22) zu einem anderen während des Kippens des Gefäßes (10) in einer Kippposition, wobei die Winkelmesseinrichtung (41) den Kippwinkel des Gefäßes in der Kippposition erfasst, in welcher die Berechnungseinheit (40) das veränderte Lichtspektrum beim Übergang an der Grenzschicht (23, 24) erkennt.

14. Vorrichtung nach einem der Ansprüche 12 oder 13,
**dadurch gekennzeichnet, dass**
das erste Medium (20) als Metallschmelze ausgebildet ist.

15. Vorrichtung nach einem der Ansprüche 12 bis 14,
**dadurch gekennzeichnet, dass**
das zweite Medium (21) gasförmig ausgebildet ist.

16. Vorrichtung nach einem der Ansprüche 12 bis 15,
**dadurch gekennzeichnet, dass**
das ein drittes Medium (22) als Schlacke ausgebildet ist.

17. Vorrichtung nach einem der Ansprüche 12 bis 16,

**dadurch gekennzeichnet, dass**

eine Überdruckeinrichtung vorgesehen ist zum Einbringen eines neutralen Gasgemisches, wie beispielsweise $O_2/N_2$ oder $O_2/Ar$ Schutzgas mit Überdruck durch einen Anschluss in die Messstelle, um bei dem Kippvorgang ein Austreten der in dem Gefäß (10) befindlichen Medien (21,21,22) aus dem Gefäß (10) durch die Messstelle (30) zu verhindern.

**Claims**

1. Method of determining the level height $p_1$ of a first medium (20) in a tiltable metallurgical vessel (10), for example in a converter, wherein the first medium (20) is covered by a second medium (21), comprising the following steps:

   a arranging a measurement point (30) in the vessel wall (12) above the level $p_1$ of the first medium (20) with vertical orientation of the metallurgical vessel (10),
   b tilting the vessel (10),
   c during tiling of the vessel: recognising a first tilt position, in which the first medium (20) reaches the measurement point (30), with the help of a sensor and an evaluating unit, (40),
   d determining a first tilt angle $\alpha_1$ in this first tilt position, and
   e calculating the level height $p_1$ of the first medium (20) with a vertical position of the vessel (10) from the determined first tilt angle $\alpha_1$ on the basis of trigonometric functions.

2. Method according to claim 1, **characterised in that** for calculation of the level height $p_1$ of the first medium (20) initially a height difference (33) $h_{difference}$ at the wall (12) of the vessel (10) is calculated from the predetermined half diameter D (14) of the vessel (10) and the determined first tilt angle $\alpha_1$ as:

$$h_{difference} = D/2 \tan \alpha_1$$

and then the level height $p_1$ of the first medium (20) is calculated as a difference of the height of the measurement point (31) $h_{measurement}$ point and the height difference (33) $h_{difference}$ as:

$$p_1 = h_{measurement\ point} - h_{difference}.$$

3. Method according to one of claims 1 and 2, **characterised in that** the sensor is constructed in the form of an optical laser system for generating a laser measurement beam and the evaluating unit (40) is constructed for evaluating light spectra; and the recognition of the first tilt position according to step c comprising the following sub-steps:

   c1 introducing the laser measurement beam into the vessel interior via the measurement point in the form of an opening in the vessel wall,
   c2 irradiating the second medium (21) with the laser measurement beam for producing a second plasma from the second medium (21),
   c3 identifying the second medium (21) by detection and evaluation of the light spectrum of the second plasma by the evaluating unit (40),
   c4 tilting the vessel (10) until the first medium (20) reaches the laser measurement beam,
   c5 producing a first plasma from the first medium (20) by the laser measurement beam,
   c6 recognising the first medium (20) by evaluation of the first plasma or at least recognising another, third medium (22) as the initially recognised second medium (21),
   and
   c7 defining the tilt setting at which the third medium (22) reaches the measurement point (30) and/or is recognised as the first tilt position.

4. Method according to claim 3,
   **characterised in that**
   the further, third medium (22) is present in the metallurgical vessel (10) as a heterogeneus intermediate layer between the first medium (20) and the second medium (21), wherein the third medium (22) forms a first boundary layer (23) with the first medium (20) and a second boundary layer (24) with the second medium (21) and wherein the measurement point (30) in vertical orientation of the metallurgical vessel (10) is arranged above the second boundary layer (24); and

for determination of the overall level height $p_{3+1}$ of the third medium (22) with the underlying first medium (20), referred to the vertical orientation of the vessel (10), the procedure is as follows:

repeating the steps c), d) and e) according to claim 1 or 2 with respect to the third medium, wherein in step c) the vessel is tilted into a second tilt position until the third medium (22) or the second boundary layer (24) reaches the measurement point (30), wherein in step d) a second tilt angle $\alpha_{3+1}$ for the second tilt position is determined, and wherein according to step e) the overall level height $p_{3+1}$ of the third medium (22) with the underlying first medium is calculated with consideration of the second tilt angle $\alpha_{3+1}$.

5. Method according to claim 4,
   **characterised in that**
   the sensor is constructed in the form of an optical laser system for generating a laser measurement beam and the evaluating unit (40) is constructed for evaluating light spectra;
   and the detection of the first tilt angle $\alpha_1$, $\alpha_{3+1}$ according to step c comprises the following sub-steps:

   c1' introducing the laser measurement beam into the vessel interior via the measurement point in the form of an opening in the vessel wall (12),
   c2' irradiating the second medium (21) with the laser measurement beam for producing a second plasma from the second medium (21),
   c3' identifying the second medium (21) by detection and evaluation of the light spectrum of the second plasma by the evaluating unit (40),
   c4' tilting the vessel (10) into a tilt setting until the third medium (22) reaches the laser measurement beam and a third plasma is produced from the third medium (22) by the laser measurement beam,
   c5' wherein the third medium (22) is recognised by the evaluating unit (40), and
   c6' defining the tilt setting in which the third medium (22) reaches the measurement point and/or is recognised as second tilt position.

6. Method according to claim 4 or 5, **characterised in that** the layer thickness (25) of the third medium (22) is calculated by subtraction of the level height $p_1$ of the first medium (20) from the overall level height $p_{3+1}$.

7. Method according to claim 5 or 6, **characterised in that** in the case of laser beam measurement carried out in the nanosecond to microsecond range the entire measurement process inclusive of the required tilt movement of the metallurgical vessel (10) is carried out in a time period of approximately 30 to 50 seconds.

8. Method according to any one of the preceding claims, **characterised in that** the first medium (20) is formed as a metal melt.

9. Method according to any one of the preceding claims, **characterised in that** the second medium (21) is formed as a gaseous medium.

10. Method according to any one of the preceding claims, **characterised in that** the third medium (22) is formed as a slag.

11. Method according to any one of the preceding claims, **characterised in that** for determination of the level height $p_1$ of the first medium (20) the maximum tilt angle $\alpha_1$ referred to the vertical position of the vessel (10) is 35° to 45° and the second tilt angle $\alpha_{3+1}$ is, for determination of the layer thickness of the third medium (22), reduced by approximately 5 to 10°.

12. Device for carrying out a method for determining the level height of a first medium (20) in a tiltable metallurgical vessel (10), for example in a converter, wherein the first medium (20) is covered in the vessel (10) by a second medium (21) and wherein the device comprises:

   an evaluating unit (40) for detecting a first tilt position of the vessel;
   an angle measuring device (41) for determining the first tilt angle $\alpha_1$ in the first tilt position; and
   a calculating unit (40) for calculating the level height;
   **characterised in that**
   a measurement point (30) which in vertical orientation of the vessel (10) is arranged above the level of the first medium (20) is provided in the vessel wall (12),

a sensor is associated with the measurement point (30) and the sensor and evaluating unit (40) are constructed for detecting the first tilt position, at which the first medium (20) reaches the measurement point (30) during tilting of the vessel (10), and

the calculating unit (40) is constructed for calculating the level height $p_1$ of the first medium (20) in the vertical position of the vessel (10) from the determined first tilt angle $\alpha_1$ on the basis of trigonometric functions.

13. Device according to claim 12, **characterised in that** the sensor within the measurement point (30) is constructed and arranged in the form of an optical laser system to generate a laser measurement beam which on irradiation of the media (20, 21, 22) via an opening in the vessel wall (12) produces a plasma and that the evaluating unit (40) is constructed for evaluation of the changed light spectra of the plasma of two adjacent, different media and for recognising the transition from one medium (20, 21, 22) to another during tilting of the vessel (10) into a tilt position, wherein the angle measuring device (41) detects the tilt angle of the vessel in the tilt position in which the calculating unit (40) recognises the changed light spectrum at the transition to the boundary layer (23, 24).

14. Device according to one of claims 12 and 13, **characterised in that** the first medium (20) is formed as a metal melt.

15. Device according to any one of claims 12 to 14, **characterised in that** the second medium (21) is formed to be gaseous.

16. Device according to any one of claims 12 to 15, **characterised in that** a third medium (22) is formed as a slag.

17. Device according to any one of claims 12 to 16, **characterised in that** an excess pressure device is provided in order to introduce a neutral gas mixture such as, for example, $O_2/N_2$ or $O_2/Ar$ protective gas, at excess pressure via a connection into the measurement point so as to prevent, during the tilting process, escape of the media (21, 21, 22), which are present in the vessel (10), from the vessel (10) via the measurement point (30).

**Revendications**

1. Procédé pour la détermination du niveau $p_1$ d'un premier milieu (20) dans une cuve métallurgique basculante (10), par exemple dans un convertisseur, le premier milieu (20) étant recouvert d'un deuxième milieu (21), présentant les étapes suivantes dans lesquelles :

    a. on dispose un point de mesure (30) dans la paroi (12) de la cuve au-dessus du niveau $p_1$ du premier milieu (20) dans une orientation verticale de la cuve métallurgique (10) ;
    b. on fait basculer la cuve (10) ;
    c. au cours du basculement de la cuve, on identifie une première position de basculement dans laquelle le premier milieu (20) atteint le point de mesure (30), à l'aide d'un détecteur et d'une unité d'évaluation (40) ;
    d. on détermine un premier angle de basculement $\alpha_1$ dans cette première position de basculement ;
    e. on calcule le niveau $p_1$ du premier milieu (20) en position verticale de la cuve (10) sur base de fonctions trigonométriques à partir du premier angle de basculement déterminé $\alpha_1$.

2. Procédé selon la revendication 1, **caractérisé en ce que**, pour le calcul du niveau $p_1$ du premier milieu (20), on calcule d'abord une différence de hauteur (33) $h_{différence}$ contre la paroi (12) de la cuve (10) à partir du demi diamètre prédéterminé D (14) de la cuve (10) et à partir du premier angle de basculement déterminé $\alpha 1$ en se référant à l'équation :

$$h_{différence} = D/2 \tan \alpha_1$$

et à partir de ce résultat, on calcule le niveau $p_1$ du premier milieu (20) sous la forme de la différence entre la hauteur du point de mesure (31) $h_{pointdemesure}$ et la différence de hauteur (33) $h_{différence}$ en se référant à l'équation :

$$p_1 = h_{pointdemesure} - h_{différence}$$

3. Procédé selon l'une quelconque des revendications 1 à 2, **caractérisé en ce que** le détecteur est réalisé sous la forme d'un système laser optique pour générer un faisceau de mesure laser et l'unité d'évaluation (40) est réalisée pour évaluer des spectres de lumière ; et **en ce que** l'identification de la première position de basculement conformément à l'étape c. présenté les étapes partielles suivantes dans lesquelles :

c1. on introduit le faisceau de mesure laser à travers le point de mesure sous la forme d'une ouverture dans la paroi de la cuve, à l'intérieur de la cuve ;
c2. on irradie le deuxième milieu (21) avec le faisceau de mesure laser pour générer un deuxième plasma à partir du deuxième milieu (21) ;
c3. on identifie le deuxième milieu (21) via l'enregistrement et l'évaluation du spectre de lumière du deuxième plasma via l'unité d'évaluation (40) ;
c4. on fait basculer la cuve (10) jusqu'à ce que le premier milieu (20) atteigne le faisceau de mesure laser ;
c5. on génère un premier plasma via le faisceau de mesure laser à partir du premier milieu (20) ;
c6. on identifie le premier milieu (20) par l'évaluation du premier plasma au moins on identifie un troisième milieu supplémentaire (22) différent du deuxième milieu (21) identifié au préalable ; et
c7. on définit la position de basculement dans laquelle le troisième milieu (22) atteint le point de mesure (30) et/ou on l'identifie comme étant la première position de basculement.

4. Procédé selon la revendication 3, **caractérisé en ce que**, dans la cuve métallurgique (10), le troisième milieu supplémentaire (22) est présent sous la forme d'une couche intermédiaire hétérogène entre le premier et le deuxième milieu (20, 21), le troisième milieu (22) formant une première couche limite (23) avec le premier milieu (20) et une deuxième couche limite (24) avec le deuxième milieu (21), et dans lequel le point de mesure (30), dans une orientation verticale de la cuve métallurgique (10), est disposé au-dessus de la deuxième couche limite (24) ; et, pour la détermination du niveau total $p_{3+1}$ du troisième milieu (22), par rapport auquel le premier milieu (20) est sous-jacent, en se rapportant à l'orientation verticale de la cuve (10), on procède comme suit : on répète les étapes c.) d.) et e.) selon la revendication 1 ou 2, en ce qui concerne le troisième milieu, en faisant basculer la cuve dans une deuxième position de basculement à l'étape c.) jusqu'à ce que le troisième milieu (22), respectivement la deuxième couche limite (24) atteigne le point de mesure (30), un deuxième angle de basculement $\alpha_{3+1}$ étant déterminé pour la deuxième position de basculement à l'étape e.) ; et dans lequel, conformément à l'étape d.), on calcule le niveau total $\alpha_{3+1}$ du troisième milieu (22), par rapport auquel le premier milieu est sous-jacent, en prenant en compte le deuxième angle de basculement $\alpha_{3+1}$.

5. Procédé selon la revendication 4, **caractérisé en ce que** le détecteur est réalisé sous la forme d'un système laser optique pour générer un faisceau de mesure laser et l'unité d'évaluation (40) est réalisée pour évaluer des spectres de lumière ; et **en ce que** l'enregistrement de l'angle de basculement ($\alpha_1$, $\alpha_{3+1}$) conformément à l'étape c., présente les étapes partielles dans lesquelles :

c1'. on introduit le faisceau de mesure laser à travers le point de mesure sous la forme d'une ouverture dans la paroi (12) de la cuve, à l'intérieur de la cuve ;
c2'. on irradie le deuxième milieu (21) avec le faisceau de mesure laser pour générer un deuxième plasma dans le deuxième milieu (21) ;
c3'. on identifie le deuxième milieu (21) via l'enregistrement et l'évaluation du spectre de lumière du deuxième plasma via l'unité d'évaluation (40) ;
c4'. on fait basculer la cuve (10) dans une position de basculement jusqu'à ce que le troisième milieu (22) atteigne le faisceau de mesure laser et, via le faisceau de mesure laser à partir du troisième milieu (22), on génère un troisième plasma ;
c5'. dans lequel, on identifie le troisième milieu (22) via l'unité d'évaluation (40) ; et
c6'. on définit la position de basculement dans laquelle le troisième milieu (22) atteint le point de mesure et/ou on l'identifie comme étant la deuxième position de basculement.

6. Procédé selon la revendication 4 ou 5, **caractérisé en ce qu'**on calcule l'épaisseur de couche (25) du troisième milieu (22) par soustraction du niveau $p_1$ du premier milieu (20) du niveau total $p_{3+1}$.

7. Procédé selon la revendication 5 ou 6, **caractérisé en ce qu'**on met en oeuvre, lors de la mesure du faisceau laser qui a lieu dans la plage des nanosecondes aux microsecondes, la mesure totale, y compris le mouvement de basculement requis de la cuve métallurgique (10), dans un laps de temps d'environ 30 à 50 secondes.

8. Procédé selon l'une quelconque des revendications précédentes, **caractérisé en ce que** le premier milieu (20) est réalisé sous la forme de métal liquide.

9.  Procédé selon l'une quelconque des revendications précédentes, **caractérisé en ce que** le deuxième milieu (21) est réalisé sous la forme d'un milieu gazeux.

10. Procédé selon l'une quelconque des revendications précédentes, **caractérisé en ce que** le troisième milieu (22) est réalisé sous la forme de laitier.

11. Procédé selon l'une quelconque des revendications précédentes, **caractérisé en ce que**, pour la détermination du niveau $p_1$ du premier milieu (20), l'angle de basculement maximal ($\alpha_1$) rapporté à la position verticale de la cuve (10), s'élève de 35° à 45°, et le deuxième angle de basculement ($\alpha_{3+1}$) pour la détermination de l'épaisseur de couche du troisième milieu (22) est diminué à concurrence d'environ 5 à 10°.

12. Dispositif pour la mise en oeuvre d'un procédé pour la détermination du niveau d'un premier milieu (20) dans une cuve métallurgique basculante (10), par exemple dans un convertisseur, le premier milieu (20) dans la cuve (10) étant recouvert d'un deuxième milieu (21) ; et dans lequel le dispositif présente :

    une unité d'évaluation (40) pour l'enregistrement d'une première position de basculement de la cuve ;
    un mécanisme de mesure angulaire (41) pour la détermination du premier angle de basculement ($\alpha_1$) dans la première position de basculement ; et
    une unité de calcul (40) pour le calcul du niveau ;
    **caractérisé en ce qu'**on prévoit un point de mesure (30) dans la paroi (12) de la cuve, qui est disposé au-dessus du niveau du premier milieu (20) lorsque la cuve (10) est orientée en direction verticale ;
    **en ce qu'**un détecteur est attribué au point de mesure (30) et
    **en ce que** le détecteur et l'unité d'évaluation (40) sont réalisés pour l'enregistrement de la première position de basculement dans laquelle le premier milieu (20), au cours du basculement de la cuve (10), atteint le point de mesure (30) ; et
    **en ce que** l'unité de calcul (40) est réalisée pour le calcul du niveau $p_1$ du premier milieu (20), dans la position verticale de la cuve (10), sur base de fonctions trigonométriques à partir du premier angle de basculement déterminé ($\alpha_1$).

13. Dispositif selon la revendication 12, **caractérisé**
    **en ce que** le détecteur est réalisé, au sein du point de mesure (30), sous la forme d'un système laser optique et est disposé pour générer un faisceau de mesure laser qui génère, lors de l'irradiation des milieux (20, 21, 22), un plasma à travers une ouverture dans la paroi (12) de la cuve ; et
    **en ce que** l'unité d'évaluation (40) est réalisée, pour l'évaluation des spectres de lumière modifiés des plasmas de deux milieux voisins différents et pour l'identification de la transition d'un milieu (20, 21, 22) à l'autre au cours du basculement de la cuve (10) dans une position de basculement, le mécanisme de mesure angulaire (41) enregistrant l'angle de basculement de la cuve dans la position de basculement, dans lequel l'unité de calcul (40) identifie le spectre de lumière modifié lors de la transition à la couche limite (23, 24).

14. Dispositif selon l'une quelconque des revendications 12 ou 13, **caractérisé en ce que** le premier milieu (20) est réalisé sous la forme de métal liquide.

15. Dispositif selon l'une quelconque des revendications 12 à 14, **caractérisé en ce que** le deuxième milieu (21) est réalisé sous la forme d'un milieu gazeux.

16. Dispositif selon l'une quelconque des revendications 12 à 15, **caractérisé en ce que** le troisième milieu (22) est réalisé sous la forme de laitier.

17. Dispositif selon l'une quelconque des revendications 12 à 16, **caractérisé en ce qu'**on prévoit un mécanisme de surpression pour introduire un mélange de gaz neutre, comme par exemple un gaz de protection de $O_2/N_2$ ou de $O_2/Ar$, avec une surpression via un raccordement dans le point de mesure pour empêcher, lors du processus de basculement, une sortie des milieux (20, 21, 22) se trouvant dans la cuve (10), via le point de mesure (30), hors de la cuve (10).

FIG.1

FIG. 3

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10207395 B4
- DE 3822705 C2
- DE 10352628 A1
- DE 69605665 T2
- WO 2008031469 A1